# EUROPEAN PATENT APPLICATION

(11) **EP 2 180 395 A1**
(43) Date of publication of application: **28.04.2010**
(21) Application number: 08018709.9
(22) Date of filing: 24.10.2008
(51) Int. Cl.: G06F 3/01

(54) **Display control device and display control method**

(71) Applicant: Himax Media Solutions, Inc., Sinshih Township, Tainan County 74445 (TW)
(72) Inventor: Liu, Shu-Ming, Tainan County 74445 (TW)
(74) Representative: Becker Kurig Straus

(57) **Abstract**

A display control device to control settings of a display is provided. The display control device comprises a photo sensor, a determining module and a controller. The photo sensor detects a user hand at different timings to generate a plurality of images. The determining module analyzes the images to generate a series of gesture signals for the user hand. The controller generates a control signal to display an on-screen display menu once activated, and to select options within the on-screen display menu and control the setting of the selected option based on the gesture signals such that the display can be adjusted accordingly.

## Description

### BACKGROUND

### Field of Invention

The present invention relates to a display control device and its method. More particularly, the present invention relates to a display control device and its method that may be operated through user gesture without contact.

### Description of Related Art

Different users are accustomed to different display settings, such as the contrast, the brightness, the sharpness, the vertical position and the horizontal position. Thus, an on-screen display control mechanism that is implemented by control buttons is always provided in a conventional display for users to adjust the display settings described above. However, physical contacts of the control buttons are easy to cause mechanical wear, it is desired to have a contactless on-screen display control mechanism to overcome the above issues. The present invention addresses such a need.

### SUMMARY

A display control device to control settings of a display is provided. The display control device comprises a photo sensor, a determining module and a controller. The photo sensor detects a user hand at different timings to generate a plurality of images. The determining module analyzes the images to generate a series of gesture signals for the user hand. The controller generates a control signal to display an on-screen display menu once activated, and to select options within the on-screen display menu and control the setting of the selected option based on the gesture signals such that the display can be adjusted accordingly.

Another object of the present invention is to provide a display control method to control settings of a display. The display control method comprises the steps of displaying an on-screen display menu once activated, detecting a user hand at different timings to generate a plurality of images, analyzing the images to generate a series of gesture signals for the user hand, and selecting options within the on-screen display menu and controlling the setting of the selected option based on the gesture signals such that the display can be adjusted accordingly.

It is to be understood that both the foregoing general description and the following detailed description are by examples, and are intended to provide further explanation of the invention as claimed.

### BRIEF DESCRIPTION OF THE DRAWINGS

The invention can be more fully understood by reading the following detailed description of the embodiment, with reference made to the accompanying drawings as follows:
Fig. 1 is a block diagram illustrating a display control device according to an embodiment of the present invention;
Fig. 2A-2B and Fig. 3A-3C are diagrams illustrating the operation of the controller in Fig. 1 according to an embodiment of the present invention; and
Fig. 4 is a flow chart illustrating a display control method according to an embodiment of the present invention.

### DETAILED DESCRIPTION

Reference will now be made in detail to the present embodiments of the invention, examples of which are illustrated in the accompanying drawings. Wherever possible, the same reference numbers are used in the drawings and the description to refer to the same or like parts.

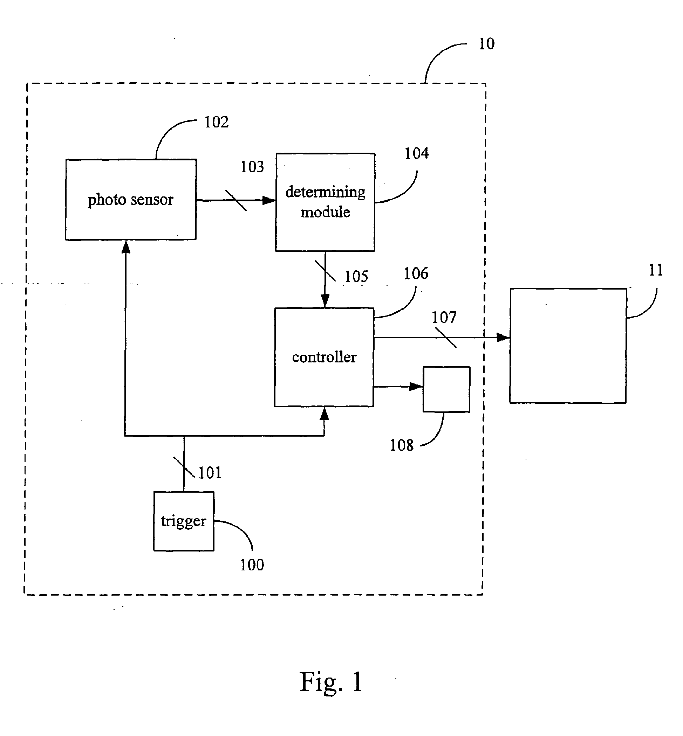

Fig. 1 is a block diagram illustrating a display control device 10 according to an embodiment of the present invention. The display control device 10 is provided to control a display 11, such as a LCD, PDP or CRT display. The display control device 10 comprises a trigger 100, a photo sensor 102, a determining module 104 and a controller 106. The photo sensor 102, for example, may be a CMOS or CCD sensor and may be mounted on the boundary of the display 11. The trigger 100, in response to a user input, generates an activating signal 101 to activate the display control device 10 including the photo sensor 102, the determining module 104 and the controller 106. The photo sensor 102 detects a user hand in front of the display 11 at different timings to generate and transfer a plurality of images 103 to the determining module 104. The determining module 104 analyzes the images 103 from the photo sensor 102 to generate and transfer a series of gesture signals 105 to the controller 106. In this case, the gesture signals 105 may indicate leftward, rightward, upward, downward and swinging gestures for the user hand. The controller 106 generates a control signal 107 to display an on-screen display menu on the display 11 once activated, and to select options within the on-screen display menu and control the setting of the selected option based on the gesture signals. The display control device 10 may further comprise an indicator 108, such as a LED, placed on the boundary of the display 11 to confirm safe receipt of the gesture signals. In this case, once each of the gesture signals 105 from the determining module 104 is received by the controller 106, the indicator 108 will light on to confirm safe receipt of the gesture signal.

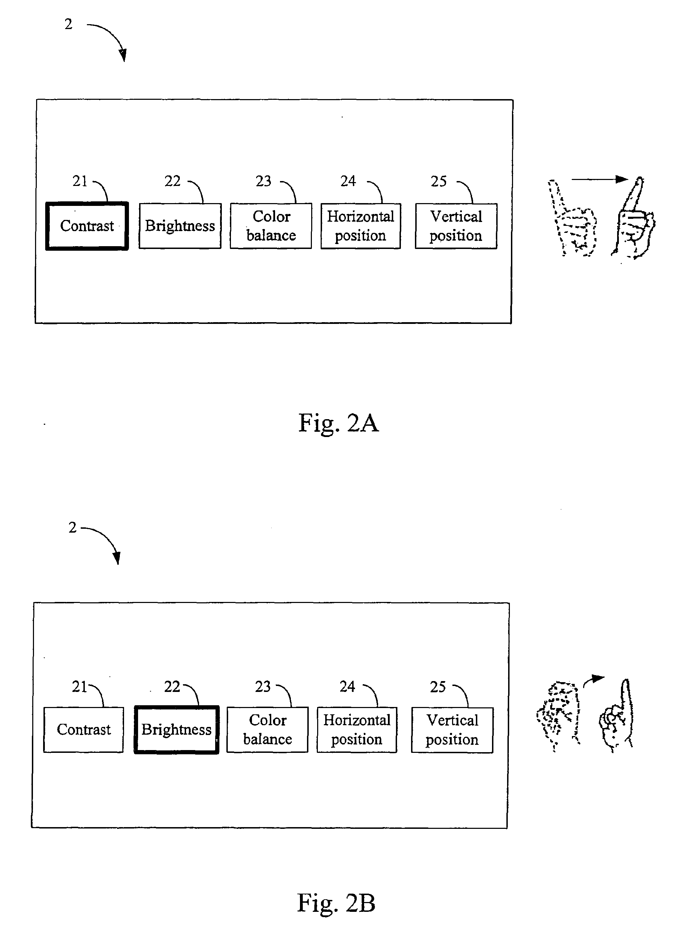

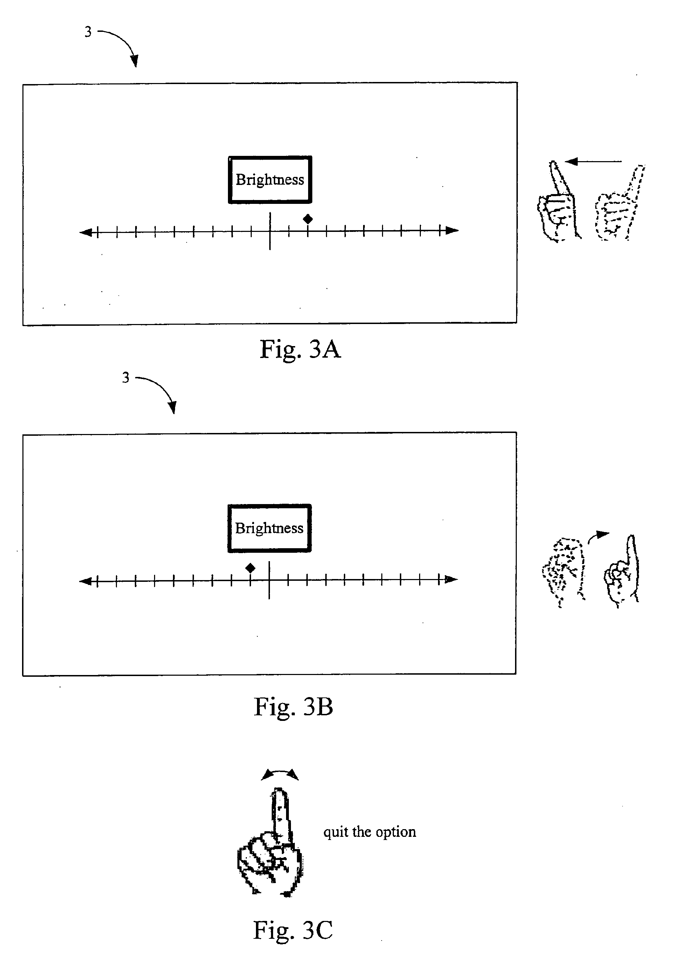

Fig. 2A-2B and Fig. 3A-3C are diagrams illustrating the operation of the controller 106 in Fig. 1 according to an embodiment of the present invention. Once activated, the controller 106 displays an on-screen display menu 2, as shown in Fig. 2A, on the display 11. The on-screen display menu 2 comprises a plurality of options. In the present embodiment, there are five options 21-25 in the on-screen display menu 2. The five options 21-25 are contrast, brightness, color balance, horizontal position and vertical position, and these options 21-25 are horizontally arranged on the on-screen display menu 2. Thus, the selection of the options 21-25 within the on-screen display menu 2 may be achieved by one or more horizontal (leftward or rightward) gesture signals, followed by another confirm gesture signal, such as a vertical (upward or downward) gesture signal. As shown at the right side of Fig. 2A, when the user hand moves from the left side to the right side to obtain a rightward gesture signal, therefore, as depicted in Fig. 2B, the options are switched from 21 to 22, i.e. contrast to brightness. Further, the option 22 is selected by another upward gesture signal, as depicted at the right side of the Fig. 2B.

After the selection of the option 22, the controller 106 generates a control signal 107 to display an adjustment bar 3 for the selected option 22, as shown in Fig. 3A. In this case, different positions of the adjustment bar 3 represent different levels of the brightness, and a cursor is provided to indicate the current brightness setting. As described previously, since the adjustment bar is also horizontally arranged, the controlling of the setting of the selected option 22 may be achieved selected option 22 may be by one or more horizontal (leftward or rightward) gesture signals, followed by another confirm gesture signal, such as a vertical (upward or downward) gesture signal. As depicted at the right side of Fig. 3A, when the user hand moves from right to left to obtain a leftward gesture signal, thus the cursor is switched from right to left as well as depicted in Fig. 3B. Thereafter, the current brightness setting is selected by another upward gesture signal, as depicted at the right side of the Fig. 3B, and the brightness of the display 11 may be adjusted accordingly.

On the other hand, anytime when the user decides to exit the selection of the options or to exit the controlling of the setting, another kind of gesture signal indicating a swinging gesture as depicted in Fig. 3C can be also used.

Although the display control device 10 according to an embodiment of the present invention is exemplified above, it is possible that other modifications may be made thereto. In other embodiments, the arrangement of the on-screen display menu 2 and the adjustment bar 3 can be different, such as in a vertical or two-dimensional arrangement. In other embodiment, the use and definition of the gesture signals can be varied as well.

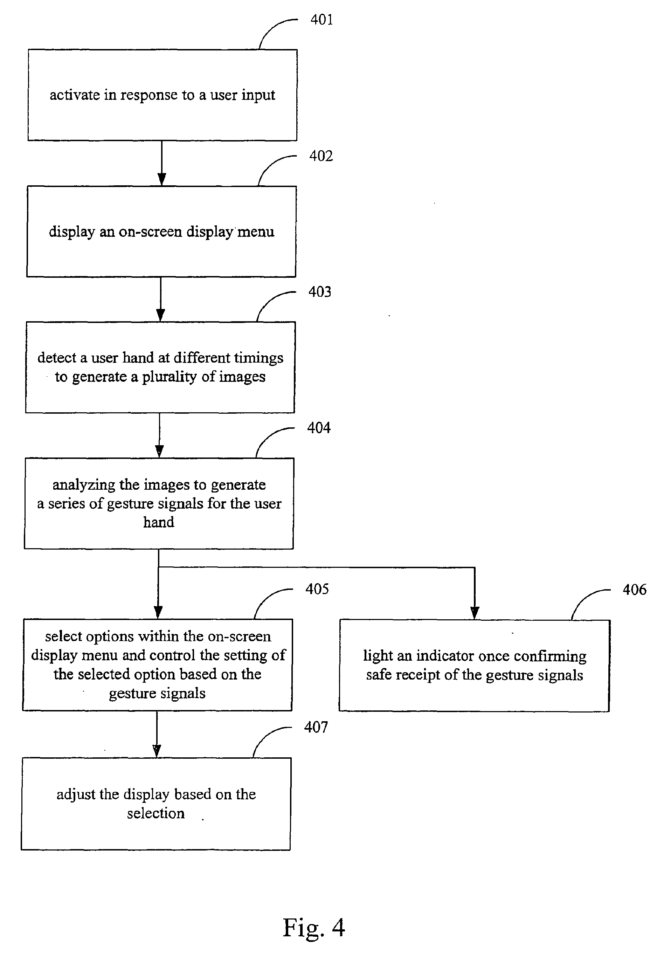

Fig. 4 is a flow chart illustrating a display control method according to an embodiment of the present invention. The display panel method is to control a display, such as a LCD, PDP or CRT display, which the steps as follow. In step 401, the display control method may be activated, such as in response to a user input. Once activated, in step 402, an on-screen display menu may be shown on the display. In step 403, a user hand may be detected at different timings to generate a plurality of images. For example, the detection of the user hand may be obtained by a CMOS or CCD sensor. In step 404, a series of gesture signals for the user hand are generated by analyzing the received images. For example, the received images may be analyzed with image recognition and movement estimation techniques. Further, the gesture signals may indicate leftward, rightward, upward, downward and swinging gestures for the user hand. In step 405, the options within the on-screen display may be selected and the setting of the selected option may be controlled based on the gesture signals, such that the display may be adjusted accordingly, as shown in step 407. For example, the options of on-screen display menu 2 are arranged in a horizontal direction, as shown in Fig. 2A, and the selecting of the options within the on-screen display menu 2 may be achieved by one or more horizontal (leftward or rightward) gesture signals, followed by another confirm gesture signal, such as a vertical (upward or downward) gesture signal. Moreover, an adjustment bar 3 may be displayed once the selected option is confirmed, as shown in Fig. 3A. Since the adjustment bar is also horizontally arranged, the controlling of the setting of the selected option may be also achieved by one or more horizontal (leftward or rightward) gesture signals, followed by a vertical (upward or downward) gesture signal. Meanwhile, to ensure safe receipt of the gesture signals, as shown in step 406, an indicator may be lighted on once safe receipt of each of the gesture signals is confirmed. For example, the indicator may be a LED.

With the present invention above, contactless on-screen display control can be provided to overcome the existing mechanical issue.

Although the display control method according to an embodiment of the present invention is exemplified above, it is possible that other modifications may be made thereto. In other embodiments, the arrangement of the on-screen display menu 2 and the adjustment bar 3 can be different, such as in a vertical or two-dimensional arrangement. In other embodiment, the use and definition of the gesture signals can be varied as well.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims.

## Claims

1. A display control device to control settings of a display, wherein the display control device comprises:
a photo sensor to detect a user hand at different timings to generate a plurality of images;
a determining module to analyze the images to generate a series of gesture signals for the user hand; and
a controller to generate a control signal to display an on-screen display menu once activated, and to select options within the on-screen display menu and control the setting of the selected option based on the gesture signals such that the display can be adjusted accordingly.

2. The display control device of claim 1, further comprising a trigger to generate an activating signal in response to a user input, such that the display control device may be activated.

3. The display control device of claim 1, wherein the options of on-screen display menu are arranged in a first direction, and the selection of the options within the on-screen display menu is achieved by one or more gesture signals in the first direction, followed by another gesture signal in a second direction perpendicular to the first direction.

4. The display control device of claim 3, wherein the controller displays an adjustment bar once the selected option is confirmed, the controlling of the setting of the selected option is achieved by one or more gesture signals in the first direction, followed by another gesture signal in a second direction perpendicular to the first direction.

5. The display panel control device of claim 4, wherein the first direction is horizontal, and a second direction is vertical.

6. The display panel control device of claim 4, wherein the first direction is vertical, and a second direction is horizontal.

7. The display control device of claim 1, wherein the photo sensor is a CMOS sensor.

8. The display control device of claim 1, wherein the photo sensor is a CCD sensor.

9. The display control device of claim 1, further comprising an indicator confirming safe receipt of the gesture signals from the determining module.

10. The display control device of claim 9, wherein the indicator is a LED.

11. A display control method to control settings of a display, comprising:
displaying an on-screen display menu once activated;
detecting a user hand at different timings to generate a plurality of images;
analyzing the images to generate a series of gesture signals for the user hand; and
selecting options within the on-screen display menu and controlling the setting of the selected option based on the gesture signals such that the display can be adjusted accordingly.

12. The display control method of claim 11, further comprising lighting an indicator once confirming safe receipt of the gesture signals.

13. The display control method of claim 12, wherein the indicator is a LED.

14. The display control method of claim 11, wherein the options of on-screen display menu are arranged in a first direction, and the selecting of the options within the on-screen display menu is achieved by one or more gesture signals in the first direction, followed by another gesture signal in a second direction perpendicular to the first direction.

15. The display control method of claim 14, further comprising displaying an adjustment bar once the selected option is confirmed, and the controlling of the setting of the selected option is achieved by one or more gesture signals in the first direction, followed by another gesture signal in a second direction perpendicular to the first direction.
